# EUROPEAN PATENT SPECIFICATION

(11) **EP 2 645 620 B1**
(45) Date of publication and mention of the grant of the patent: **27.08.2014**
(21) Application number: 12006187.4
(22) Date of filing: 31.08.2012
(51) Int. Cl.: H04L 12/10, H04L 12/40, H04M 3/18, H04L 25/02

(54) **Low-frequency noise interference prevention in power over ethernet systems**
Niederfrequente Rausch-Störungs-Unterdrückung in einem Power-over-Ethernet System
Prévention du bruit d'intérference de basse fréquence pour systeme a alimentation electrique par cable ethernet (POE)

(30) Priority: 27.03.2012 US 201261615968 P; 26.04.2012 US 201213456810
(43) Date of publication of application: 02.10.2013
(73) Proprietor: Broadcom Corporation, Irvine, CA 92617 (US)
(72) Inventor: Yu, James, Pleasonton, CA 94588 (US)
(74) Representative: Jehle, Volker Armin

(56) References cited:
- WO-A2-00/64099
- US-A- 6 140 911
- US-A1- 2008 062 590

## Description

This application claims priority to provisional patent application no. 61/615,968, filed March 27, 2012.

### BACKGROUND

### Field of the Invention

The present invention relates generally to network powering systems and methods and, more particularly, to low frequency noise interference prevention in power over Ethernet systems.

### Introduction

Power over Ethernet (PoE) provides a framework for delivery of power from power sourcing equipment (PSE) to a powered device (PD) over Ethernet cabling. Various types of PDs exist, including voice over IP (VoIP) phones, wireless LAN access points, Bluetooth access points, network cameras, computing devices, etc.

In a PoE application such as that described in the IEEE 802.3af (which is now part of the IEEE 802.3 revision and its amendments) and 802.3at specifications, a PSE can deliver power to a PD over multiple wire pairs. In accordance with IEEE 802.3af, a PSE can deliver up to 15.4W of power to a single PD over two wire pairs. In accordance with IEEE 802.3at, on the other hand, a PSE may be able to deliver up to 30W of power to a single PD over two wire pairs. Other proprietary solutions can potentially deliver higher or different levels of power to a PD. A PSE may also be configured to deliver power to a PD using four wire pairs.

US 6,140,911 discloses that electrical supply current, sufficient to power a wireless access point, is transmitted concurrently with a network data signal across a transmission line. A power and data coupler couples the network data signal and the power signal, received through a data input and a power input respectively, and transmits the coupled signal, to a distance of three meters or more, over the transmission line to a power and data decoupler.

WO 00/64099 A2 discloses a powered Ethernet connection provided between two devices connected by an Ethernet connection that provides data communication between the devices. Electrical power is applied to the Ethernet connection at the first device, and extracted from the Ethernet connection at the second device. The extracted power is used to power the second device.

### BRIEF SUMMARY OF THE INVENTION

According to an aspect, a power over Ethernet device comprising the features according to Claim 1.

Advantageously, said inductive element is an inductor.

Advantageously, said inductive element is a common mode choke.

Advantageously, said power over Ethernet module is coupled to said center tap of said second data transformer via a second inductive element.

Advantageously, said power over Ethernet module transmits power via said center tap of said first data transformer and said center tap of said second data transformer.

Advantageously, said power over Ethernet module receives power via said center tap of said first data transformer and said center tap of said second data transformer.

Advantageously, said first and second data transformers are used for 1000BASE-T transmission.

Advantageously, said first and second data transformers are used for 10GBASE-T transmission.

Advantageously, said first and second data transformers are used for 40GBASE-T transmission.

According to an aspect, a network powered device comprising the features according to Claim 10.

Advantageously, said first and second data transformers are used for 1000GBASE-T transmission.

Advantageously, said first and second data transformers are used for 10GBASE-T transmission.

Advantageously, said first and second data transformers are used for 40GBASE-T transmission.

Advantageously, said first inductive element is an inductor.

Advantageously, said first inductive element is a common mode choke element.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered limiting of its scope, the invention will be described and explained with additional specificity and detail through the use of the accompanying drawings in which:
FIG. 1 illustrates an example embodiment of low frequency noise prevention in a power over Ethernet system.
FIG. 2 illustrates a second example embodiment of low frequency noise prevention in a power over Ethernet system.
FIG. 3 illustrates a third example embodiment of low frequency noise prevention in a power over Ethernet system.
FIG. 4 illustrates an equivalent circuit for a differential data pair.
FIG. 5 illustrates a fourth example embodiment of low frequency noise prevention in a power over Ethernet system.
FIG. 6 illustrates a second equivalent circuit for a differential data pair.

### DETAILED DESCRIPTION

Various embodiments of the invention are discussed in detail below. While specific implementations are discussed, it should be understood that this is done for illustration purposes only. A person skilled in the relevant art will recognize that other components and configurations may be used without parting from the spirit and scope of the invention.

Power over Ethernet (PoE) can be used to deliver power over wire pairs that are used for data transmission. PoE can be applied to various contexts and can be used alongside data transmission standards such as 1000BASE-T, 10GBASE-T, 40GBASE-T or higher data-rate transmission systems. The data transformers used in 1000BASE-T and 10GBASE-T systems can typically have much smaller inductance, and hence lower impedance, as compared to the data transformers used with 10BASE-T and 100BASE-TX systems. In preventing the 1000BASE-T or 10GBASE-T data transmission signal from being impacted by low frequency noise interference from the PoE subsystem (e.g., noise produced by the switching regulator on PoE devices), a high-impedance device is introduced on the center pin of the data transformer to isolate the low-frequency noise produced by the PoE devices.

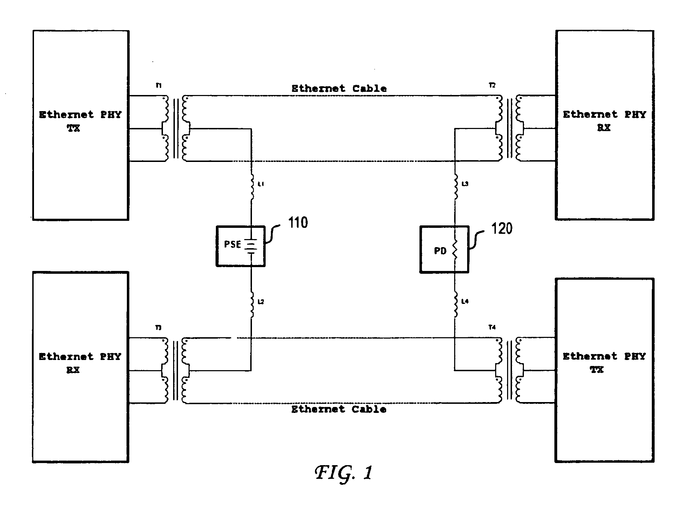

FIG. 1 illustrates an example embodiment of low frequency noise prevention in a PoE system. As illustrated, the PoE system includes PSE 110 that transmits power to PD 120 over two wire pairs. Power delivered by PSE 110 to PD 120 is provided through the application of a voltage across the center taps of data transformer T1 that is coupled to a transmit (TX) wire pair and data transformer T3 that is coupled to a receive (RX) wire pair carried within an Ethernet cable. On the other end of the network link, power is received by PD 120 through the center taps of data transformer T2 and data transformer T4.

In general, PD 120 can include a PoE module (not shown) that contains the electronics that would enable PD 120 to communicate with PSE 110 in accordance with IEEE 802.3af, 802.3at, legacy PoE transmission, or any other type of PoE transmission. PD 120 also includes a controller (e.g., pulse width modulation DC:DC controller) that controls a power transistor (e.g., field effect transistor (FET)), which in turn provides constant power to a load.

As noted, one of the issues of applying PoE to data transmission systems such as 1000BASE-T or 10GBASE-T is the impact produced by low-frequency noise interference from the PoE subsystem. For example, consider a 10GBASE-T system that is operating over a 100 meter Ethernet cable. Such a system is particularly sensitive to low-frequency noise produced by the PD, such that the transmission of power over multiple wire pairs used in the 10G network link can preclude successful transmission of data at 10G rates.

In the example embodiment illustrated in FIG. 1, additional high-impedance inductive elements (e.g., inductors) are used to isolate or attenuate the low-frequency noise that is generated by the PoE devices. Specifically, the high-voltage rail of PSE 110 is injected onto center pins of data transformers T1 and T3 through series high-impedance inductive devices represented by inductors L1 and L2, and PD 120 receives the high DC voltage from the center pins of data transformers T2 and T4 through series high-impedance inductive devices represented by inductors L3 and L4. In operation, the high-impedance inductive devices represented by inductors L1-L4 are configured to isolate the low-frequency noise produced by the PSE and PD devices.

The example embodiment illustrated in FIG. 1 is designed to isolate or attenuate the low-frequency noise from PoE devices on both ends of the link. In other embodiments, one of the PoE devices can be a relatively clean device that does not generate sufficient low-frequency noise that can interfere with the high-data rate transmission signals. In a typical installation, for example, the PD is more likely to create low-frequency noise that can interfere with the high-data rate transmission signals. Where a PoE device is a relatively clean device that does not generate significant low-frequency noise, the PoE device can be coupled to the center taps of the data transformers with little or no series high-impedance inductive devices.

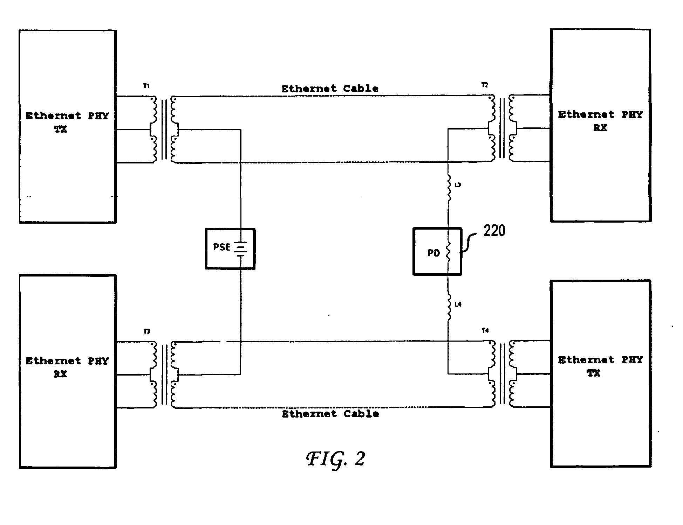

FIG. 2 illustrates a second example embodiment of low frequency noise prevention in a power over Ethernet system. As illustrated, high-impedance devices can be included on one end of the network link. Specifically, PD 220 receives the high DC voltage from the center pins of data transformers T2 and T4 through series high-impedance inductive devices represented by inductors L3 and L4. In this example, no high-impedance inductive devices are added to the PSE side of the PoE system. As would be appreciated, where the PD is a relatively clean device that does not generate sufficient low-frequency noise that can interfere with the high-data rate transmission signals, high-impedance inductive devices can be added to the PSE side and not to the PD side.

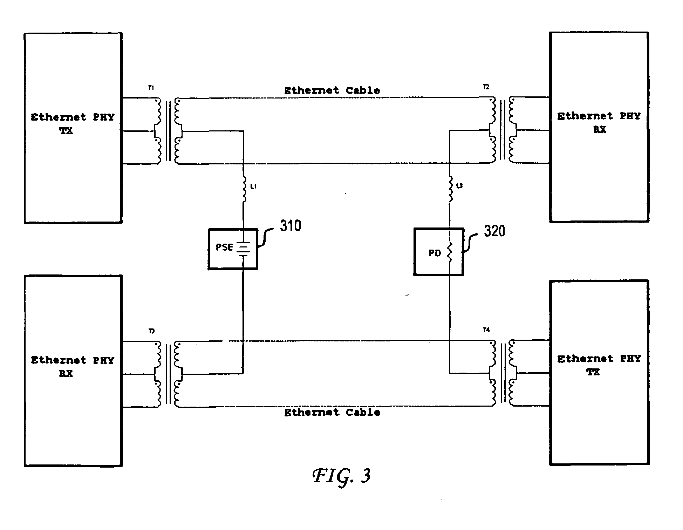

FIG. 3 illustrates a third example embodiment of low frequency noise prevention in a power over Ethernet system. As illustrated, high-impedance inductive devices can be included on one side of the PoE devices. In this example, the high-voltage rail of PSE 310 is injected onto the center pin of data transformers T 1 through the series high-impedance inductive device represented by inductor L1, and PD 320 receives the high DC voltage from the center pin of data transformers T2 through the series high-impedance inductive device represented by inductor L3. In operation, the high-impedance inductive devices represented by inductors L1 and L3 are configured to isolate the low-frequency noise produced by the PoE devices. As would be appreciated, other combinations of adding high-impedance inductive devices to one side of the PoE devices can be used without departing from the scope of the present invention.

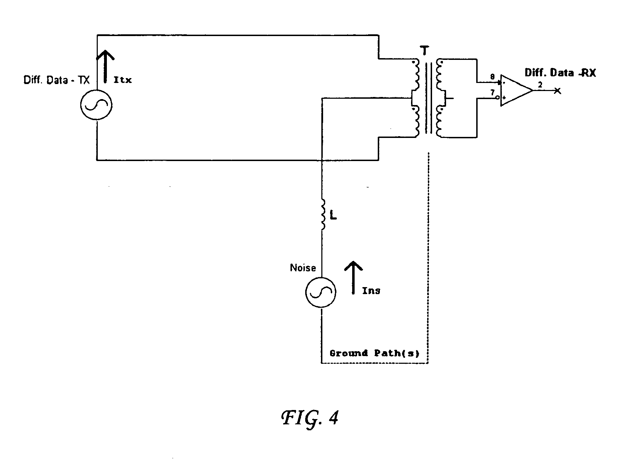

As has been described, one example of a series high-impedance inductive device is a series inductor. FIG. 4 illustrates an equivalent circuit for a differential data pair in the example of a series inductor. As illustrated, current "Itx" flows through both the data cable wires and current "Ins" flows into the center pin of the data transformer and returns through the ground path(s). According to the formula of impedance for the inductor (XL = jωL, ω = 2πf), the impedance XL will increase when the value of the inductor increases. Thus, when the value of inductor L is high enough, it will provide proper attenuation for low-frequency noise of the PoE device ("Ins").

In the present invention, it is recognized that the particular form of the high-impedance device that is used to prevent low-frequency noise interference is implementation dependant. In another example, the high-impedance device can be implemented as a common mode choke.

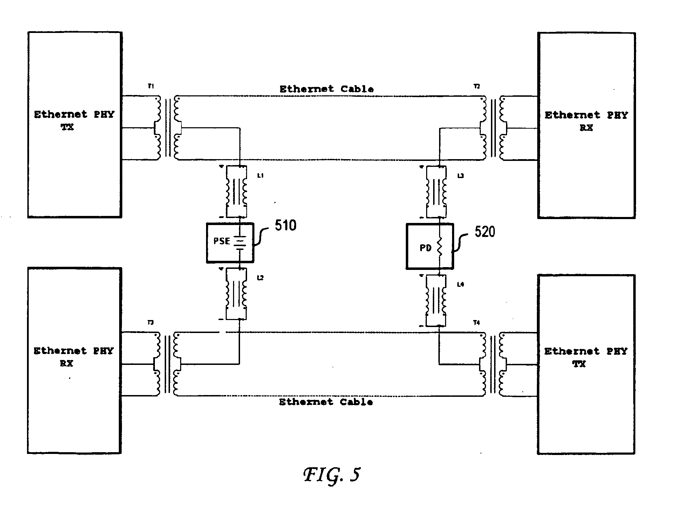

FIG. 5 illustrates a fourth example embodiment of low frequency noise prevention in a power over Ethernet system where the series high-impedance inductive device is embodied as a common mode choke. In the example embodiment illustrated in FIG. 5, common mode chokes L1, L2, L3 and L4 are used to isolate or attenuate the low-frequency noise from the PoE devices. Specifically, the high-voltage rail of PSE 510 is injected onto center pins of data transformers T1 and T3 through common mode chokes L1 and L2, and PD 520 receives the high DC voltage from the center pins of data transformers T2 and T4 through common mode chokes L3 and L4. In operation, the common mode chokes L1-L4 are configured to isolate the low-frequency noise produced by the PoE devices. As would be appreciated, the common mode chokes need not be serially connected to the center taps of every data transformer T1-T4, but can be selectively placed depending on the origin of the low-frequency noise generated by the PoE system.

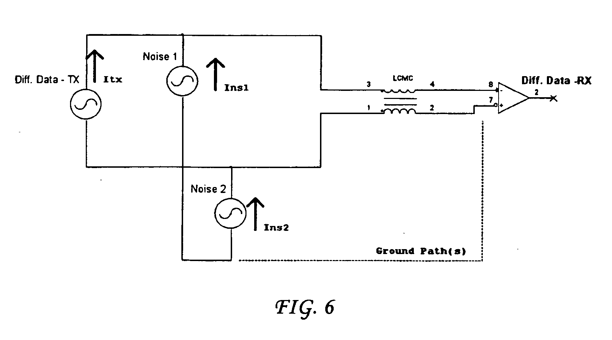

FIG. 6 illustrates a second equivalent circuit for a differential data pair in the example of common mode chokes. Here, the low-frequency noise is treated as a common mode noise (Noise 1 and Noise 2) applied to the differential data pair. Current "Itx" flows through both the data cable wires and currents "Ins1" and "Ins2" each flow through one data cable wire and return through the ground path(s). Observe that current "Itx" flows through both windings but in opposing winding directions, while currents "Ins1" and Ins2" each flow through only one winding and in the same winding direction. The ground path(s) does not flow through a winding.

The inductance of Winding A restricts (reduces) the flow of current "Ins1" (when compared to FIG. 4), thereby reducing the noise voltage across "Diff. Data - RX". Similarly the inductance of winding B restricts (hence reduces) the flow of current "Ins2". Windings A and B have the same number of turns. The ampere-turns created by Current "Itx" (but excluding any "Ins1" current component) flowing through winding A is cancelled by the opposing ampere-turns created by current "Itx" flowing through winding B. Ideally, the cancellation results in zero inductance and no restriction (no reduction) of current "Itx". "Itx" produces the same voltage across load "Diff. Data - RX".

As has been described, the prevention of a data transmission signal from being impacted by low frequency noise interference from the PoE subsystem can be enabled through the addition of high-impedance devices on the center pin of the data transformers. The addition of high-impedance devices on the center pins of the data transformers can be applied to any data transmission system that can be impacted by the low-frequency noise produced by the PoE devices.

These and other aspects of the present invention will become apparent to those skilled in the art by a review of the preceding detailed description. Although a number of salient features of the present invention have been described above, the invention is capable of other embodiments and of being practiced and carried out in various ways that would be apparent to one of ordinary skill in the art after reading the disclosed invention, therefore the above description should not be considered to be exclusive of these other embodiments. Also, it is to be understood that the phraseology and terminology employed herein are for the purposes of description and should not be regarded as limiting.

## Claims

1. A power over Ethernet device, comprising:
a first data transformer (T1) that coupled to a first wire pair in a network cable;
a second data transformer (T3) that is coupled to a second wire pair in a network cable; and
a power over Ethernet module (310) that is coupled to a center tap on a primary side of said first data transformer (T1) and a center tapon a primary side of said second data transformer (T3), **characterized in that** said power over Ethernet module (310) being coupled only to one of said center taps of said first data transformer (T1) and said second data transformer (T3) via an inductive element depending on an origin of low-frequency noise generated by the power over Ethernet device.

2. The power over Ethernet device of claim 1, wherein said inductive element is an inductor.

3. The power over Ethernet device of claim 1, wherein said inductive element is a common mode choke.

4. The power over Ethernet device of claim 1, wherein said power over Ethernet module is coupled to said center tap of said second data transformer via the inductive element.

5. The power over Ethernet device of claim 1, wherein said power over Ethernet module transmits power via said center tap of said first data transformer and said center tap of said second data transformer.

6. The power over Ethernet device of claim 1, wherein said power over Ethernet module receives power via said center tap of said first data transformer and said center tap of said second data transformer.

7. The power over Ethernet device of claim 1, wherein said first and second data transformers are used for 1000BASE-T transmission.

8. The power over Ethernet device of claim 1, wherein said first and second data transformers are used for 10GBASE-T transmission.

9. The power over Ethernet device of claim 1, wherein said first and second data transformers are used for 40GBASE-T transmission.

10. A network powered device, comprising:
a transmitter that is coupled to a first data transformer (T2) for data transmission by said transmitter, said first data transformer being coupled to a first copper twisted pair;
a receiver that is coupled to a second data transformer (T4) for data reception by said receiver, said second data transformer being coupled to a second copper twisted pair;
a network powered module (320) that receives power via said first and second copper twisted pair, said network powered module (320) being coupled to a center tap on a primary side of said first data transformer (T2) and to a center tap on a primary side of said second data transformer (T4);
**characterized in that** said network powered module (320) being coupled only to one of said center taps of said first data transformer (T2) and said second data transformer (T4) via an inductive element depending on an origin of low-frequency noise generated by the network powered device.

11. The network powered device of claim 10, wherein said first and second data transformers are used for 1000GBASE-T transmission.

12. The network powered device of claim 10, wherein said first and second data transformers are used for 10GBASE-T transmission.

13. The network powered device of claim 10, wherein said first and second data transformers are used for 40GBASE-T transmission.

14. The network powered device of claim 10, wherein said inductive element is an inductor.

15. The network powered device of claim 10, wherein said inductive element is a common mode choke element.

## Patentansprüche

1. Power-over-Ethernet-Vorrichtung mit:
einem ersten Datenumwandler (T1), der mit einem ersten Drahtpaar in einem Netzkabel verbunden ist;
einem zweiten Datenumwandler (T3), der mit einem zweiten Drahtpaar in einem Netzkabel verbunden ist; und
einem Power-over-Ethernet-Modul (310), das mit einem Mittelabgriff auf einer primären Seite des ersten Datenumwandlers (T1) und einem Mittelabgriff auf einer primären Seite des zweiten Datenumwandlers (T3) verbunden ist,
**dadurch gekennzeichnet, dass** das Power-over-Ethernet-Modul (310) nur mit einem der Mittelabgriffe des ersten Datenumwandlers (T1) und des zweiten Datenumwandlers (T3) über ein induktives Element verbunden ist, in Abhängigkeit vom Ursprung des von der Power-over-Ethernet-Vorrichtung erzeugten niederfrequenten Rauschens.

2. Power-over-Ethernet-Vorrichtung nach Anspruch 1, wobei das induktive Element ein Induktor ist.

3. Power-over-Ethernet-Vorrichtung nach Anspruch 1, wobei das induktive Element eine Gleichtaktdrossel ist.

4. Power-over-Ethernet-Vorrichtung nach Anspruch 1, wobei das Power-over-Ethernet-Modul über das induktive Element mit dem Mittelabgriff des zweiten Datenumwandlers verbunden ist.

5. Power-over-Ethernet-Vorrichtung nach Anspruch 1, wobei das Power-over-Ethernet-Modul Strom über den Mittelabgriff des ersten Datenumwandlers und den Mittelabgriff des zweiten Datenumwandlers überträgt.

6. Power-over-Ethernet-Vorrichtung nach Anspruch 1, wobei das Power-over-Ethernet-Modul Strom über den Mittelabgriff des ersten Datenumwandlers und den Mittelabgriff des zweiten Datenumwandlers empfängt.

7. Power-over-Ethernet-Vorrichtung nach Anspruch 1, wobei die ersten und zweiten Datenumwandler für 1000BASE-T-Übertragung verwendet werden.

8. Power-over-Ethernet-Vorrichtung nach Anspruch 1, wobei die ersten und zweiten Datenumwandler für 10GBASE-T-Übertragung verwendet werden.

9. Power-over-Ethernet-Vorrichtung nach Anspruch 1, wobei die ersten und zweiten Datenumwandler für 40GBASE-T-Übertragung verwendet werden.

10. Netzgetriebene Vorrichtung, die aufweist:
einen Sender, der mit einem ersten Datenumwandler (T2) zur Datenübertragung durch den Sender verbunden ist, wobei der erste Datenumwandler mit einer ersten verdrillten Kupferleitung verbunden ist;
einen Empfänger, der mit einem zweiten Datenumwandler (T4) zum Datenempfang durch den Empfänger verbunden ist, wobei der zweite Datenumwandler mit einer zweiten verdrillten Kupferleitung verbunden ist;
ein netzgetriebenes Modul (320), das über die ersten und zweiten verdrillten Kupferleitungen Strom empfängt, wobei das netzgetriebene Modul (320) mit einem Mittelabgriff auf einer primären Seite des ersten Datenumwandlers (T2) und einem Mittelabgriff auf einer primären Seite des zweiten Datenumwandlers (T4) verbunden ist;
**dadurch gekennzeichnet, dass** das netzgetriebene Modul (320) nur mit einem der Mittelabgriffe des ersten Datenumwandlers (T2) und des zweiten Datenumwandlers (T4) über ein induktives Element verbunden ist, in Abhängigkeit vom Ursprung des von der netzgetriebenen Vorrichtung erzeugten niederfrequenten Rauschens.

11. Netzgetriebene Vorrichtung nach Anspruch 10, wobei die ersten und zweiten Datenumwandler für 1000BASE-T-Übertragung verwendet werden.

12. Netzgetriebene Vorrichtung nach Anspruch 10, wobei die ersten und zweiten Datenumwandler für 10GBASE-T-Übertragung verwendet werden.

13. Netzgetriebene Vorrichtung nach Anspruch 10, wobei die ersten und zweiten Datenumwandler für 40GBASE-T-Übertragung verwendet werden.

14. Netzgetriebene Vorrichtung nach Anspruch 10, wobei das induktive Element ein Induktor ist.

15. Netzgetriebene Vorrichtung nach Anspruch 10, wobei das induktive Element eine Gleichtaktdrossel ist.

## Revendications

1. Dispositif à alimentation sur Ethernet, comprenant :
un premier transformateur (T1) de données qui est couplé à une première paire de fils dans un câble réseau ;
un deuxième transformateur (T3) de données qui est couplé à une deuxième paire de fils dans un câble réseau ; et
un module (310) d'alimentation sur Ethernet qui est couplé à une prise centrale sur un côté principal dudit premier transformateur (T1) de données et à une prise centrale sur un côté principal dudit deuxième transformateur (T3) de données, **caractérisé en ce que** ledit module (310) d'alimentation sur Ethernet n'étant couplé qu'à une desdites prises centrales dudit premier transformateur (T1) de données et dudit deuxième transformateur (T3) de données par l'intermédiaire d'un élément inductif en fonction d'une origine d'un bruit basse fréquence généré par le dispositif à alimentation sur Ethernet.

2. Dispositif à alimentation sur Ethernet selon la revendication 1, dans lequel ledit élément inductif est un inducteur.

3. Dispositif à alimentation sur Ethernet selon la revendication 1, dans lequel ledit élément inductif est une bobine d'arrêt en mode commun.

4. Dispositif à alimentation sur Ethernet selon la revendication 1, dans lequel ledit module d'alimentation sur Ethernet est couplé à ladite prise centrale dudit deuxième transformateur de données par l'intermédiaire de l'élément inductif.

5. Dispositif à alimentation sur Ethernet selon la revendication 1, dans lequel ledit module d'alimentation sur Ethernet transmet une alimentation par l'intermédiaire de ladite prise centrale dudit premier transformateur de données et de ladite prise centrale dudit deuxième transformateur de données.

6. Dispositif à alimentation sur Ethernet selon la revendication 1, dans lequel ledit module d'alimentation sur Ethernet reçoit une alimentation par l'intermédiaire de ladite prise centrale dudit premier transformateur de données et de ladite prise centrale dudit deuxième transformateur de données.

7. Dispositif à alimentation sur Ethernet selon la revendication 1, dans lequel lesdits premier et deuxième transformateurs de données sont utilisés pour une transmission 1000BASE-T.

8. Dispositif à alimentation sur Ethernet selon la revendication 1, dans lequel lesdits premier et deuxième transformateurs de données sont utilisés pour une transmission 10GBASE-T.

9. Dispositif à alimentation sur Ethernet selon la revendication 1, dans lequel lesdits premier et deuxième transformateurs de données sont utilisés pour une transmission 40GBASE-T.

10. Dispositif à alimentation par le réseau, comprenant :
un émetteur qui est couplé à un premier transformateur (T2) de données pour une transmission de données par ledit émetteur, ledit premier transformateur de données étant couplé à une première paire torsadée de cuivre ;
un récepteur qui est couplé à un deuxième transformateur (T4) de données pour une réception de données par ledit récepteur, ledit deuxième transformateur de données étant couplé à une deuxième paire torsadée de cuivre ;
un module (320) à alimentation par le réseau qui reçoit une alimentation par l'intermédiaire desdites première et deuxième paires torsadées de cuivre, ledit module (320) à alimentation par le réseau étant couplé à une prise centrale sur un côté principal dudit premier transformateur (T2) de données et à une prise centrale sur un côté principal dudit deuxième transformateur (T4) de données ;
**caractérisé en ce que** ledit module (320) à alimentation par le réseau n'étant couplé qu'à une desdites prises centrales dudit premier transformateur (T2) de données et dudit deuxième transformateur (T4) de données par l'intermédiaire d'un élément inductif en fonction d'une origine d'un bruit basse fréquence généré par le dispositif à alimentation par le réseau.

11. Dispositif à alimentation par le réseau selon la revendication 10, dans lequel lesdits premier et deuxième transformateurs de données sont utilisés pour une transmission 1000BASE-T.

12. Dispositif à alimentation par le réseau selon la revendication 10, dans lequel lesdits premier et deuxième transformateurs de données sont utilisés pour une transmission 10GBASE-T.

13. Dispositif à alimentation par le réseau selon la revendication 10, dans lequel lesdits premier et deuxième transformateurs de données sont utilisés pour une transmission 40GBASE-T.

14. Dispositif à alimentation par le réseau selon la revendication 10, dans lequel ledit élément inductif est un inducteur.

15. Dispositif à alimentation par le réseau selon la revendication 10, dans lequel ledit élément inductif est un élément de bobine d'arrêt en mode commun.
